(19) **Europäisches Patentamt**

**European Patent Office**

**Office européen des brevets**

(11) **EP 0 892 109 A1**

(12) **EUROPEAN PATENT APPLICATION**

(43) Date of publication:
20.01.1999 Bulletin 1999/03

(51) Int. Cl.⁶: **D21H 13/00**, D21H 27/00, B32B 29/00

(21) Application number: 98111882.1

(22) Date of filing: 26.06.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 27.06.1997 JP 172075/97
03.07.1997 JP 178413/97
14.05.1998 JP 132068/98

(71) Applicant: **Oji Paper Co., Ltd.**
**Tokyo-to (JP)**

(72) Inventors:
• **Suzuki, Yukiko**
  **Amagasaki-shi, Hyogo-ken (JP)**
• **Furukawa, Hiroyuki**
  **Amagasaki-shi, Hyogo-ken (JP)**
• **Kishimoto, Makio**
  **Amagasaki-shi, Hyogo-ken (JP)**
• **Yamori, Tsunefumi**
  **Amagasaki-shi, Hyogo-ken (JP)**

(74) Representative: **Barz, Peter, Dr.**
**Patentanwalt**
**Kaiserplatz 2**
**80803 München (DE)**

(54) **A stucture comprising at least one layer containing synthetic fiber**

(57) A structure of at least one layer and the structure comprises at least one layer containing synthetic fiber, which is obtained by high-pressure treatment through a nip provided by a metal roll and another metal roll under a linear pressure in the range of 200 to 3500 kg/cm.

EP 0 892 109 A1

## Description

The present invention relates to a layer structure. For example, the present invention relates to paper excellent in dimensional stability. In particular, the invention relates to paper that is inexpensive, exhibits excellent dimensional stability while containing natural fiber pulp, and is applicable for card substrates excellent in printability.

The present invention also relates to a laminate integrated by high-pressure treatment which exhibits the properties inherent to component material(s) or the properties distinct from those inherent to component material(s). The invention also relates to a laminate applied to card substrates excellent in dimensional stability and printability, which is used in identification cards, driver's licenses, membership cards, magnetic recording cards, IC cards, and the like.

Further, the present invention relates to a multi layer paper containing a natural pulp which is excellent in dimensional stability, coating suitability and printability.

Paper consists essentially of cellulose fibers. The cellulose of paper has a tough crystal structure and a noncrystal structure. Water penetrates into the noncrystal structure, swelling the fibers, or conversely the structure releases water to contract the fibers. The overall expansion or contraction of paper due to variations in its water content is attributable to the expansion or contraction of the fibers which spreads through the fiber-to-fiber linkage to the entire paper structure.

To suppress the overall expansion or contraction of paper due to variations in its water content, there have been employed the following methods. A film that causes neither expansion nor contraction due to water is stacked to suppress the expansion or contraction of the entire paper by conducting the melt lamination of a polyolefin thermoplastic resin, such as polyethylene or polypropylene, to paper, or by laminating a high-molecular-weight film with adhesive. Alternatively, a compound of phenol resin or the like is impregnated in paper and cured to solidify the surrounding of cellulose fiber, thereby suppressing the expansion or shrinkage of the fiber. Alternatively, cellulose fiber is crosslinked with a crosslinking agent that reacts with hydroxyl group of cellulose.

The above methods require facilities for applying or impregnating adhesives or resins, and facilities for drying the coating applied or impregnated, and the like. Therefore, these steps will increase the number of manufacturing steps, thus causing an increase in cost.

Those which are made by utilizing laminates are used in an extremely wide variety of social situations. They are, for example, widely used in packing papers and in the field of design. In the rustproof sheets for preserving and transporting metals, (a) kraft paper, (b) film, (c) laminate paper obtained through the melt lamination of a kraft paper and a polyolefin film, such as polyethylene or polypropylene, and (d) sheet obtained by laminating a non-woven fabric and a polyolefin film, are generally employed as a substrate.

The processes for laminating papers are divided generally into four types, i.e., the wet lamination process, hot-melt lamination process, dry lamination process and extrusion coating-lamination process. The wet lamination process, dry lamination process and extrusion coating-lamination process are useful for laminating paper sheets. The wet lamination process usually comprises applying a water-soluble adhesive or water-dispersible adhesive to a sheet, laminating another sheet to the sheet while the adhesive is wet, drying the resulting laminate to cause water to evaporate off from the adhesive and winding up the laminate into a roll after completion of adhesion. This process uses the aqueous adhesive and therefore requires a drying step for the evaporation of water.

With the dry lamination process, an aqueous or solvent-type adhesive is applied to a sheet and dried, and another sheet is then affixed to the adhesive bearing surface of the sheet. This process also requires the step of drying water and solvent.

With the extrusion coating-lamination process, a thermally melted resin is extruded from a slit die in the form of a molten film onto a continuous base sheet such as paper, another sheet of paper to be laminated is placed over the film and bonded to the base sheet under pressure, and the resulting laminate is cooled to solidify the molten film.

The wet lamination process and the dry lamination processes require the drying step, an applicator for the adhesive used, and cumbersome procedures for the maintenance and cleaning of the applicator. The extrusion coating-lamination process necessitates equipment for extruding the molten resin.

Meanwhile, a plurality of cards, such as identification cards, driver's licenses, membership cards, magnetic recording cards, and IC cards, have been in practical use. Some of various cards has the use in which the dimensional stability is strictly required. When these cards are used, a certain degree of rigidity is required.

For example, magnetic recording cards are constructed by forming a magnetic recording layer on one side of a substrate, e.g., PET film. In general, since magnetic recording cards are used repeatedly to a certain extent, films having high rigidity and folding endurance are employed. With the substrate of PET film, however, the substrate of a magnetic recording card tends to have a high cost ratio because of the surface treatment for forming a magnetic recording layer.

To reduce the cost of a substrate, there have been proposed various paper substrates, such as wood free paper, converted paper, and composite paper. However, there are no paper substrates serving as a substrate of magnetic recording cards which satisfy all of dimensional stability, rigidity, coating suitability of magnetic recording layer, and printability.

In some of identification cards and membership cards, character information, such as address and name, as well as the image of a photograph of face, are recorded in the card surface. Therefore, surface smoothness and printability are particularly desired in recording the above information. IC cards wherein an IC is embedded in a card substrate may have contact failures of the connection lines of the IC which may be caused by the expansion or contraction due to variations in water content.

The aforementioned methods for increasing dimensional stability, however, have the following disadvantages. That is, the method in which a polyolefin high-molecular-weight compound is laminated to paper requires laminating after papermaking. The method in which paper is impregnated with phenolic resin, followed by curing or crosslinking, requires the steps of impregnating phenolic resin, and the like. In addition, there are difficulties in handling.

It is an object of the present invention to provide paper excellent in dimensional stability which can be obtained with easy handling in a simple manner without need for a resin treatment in the succeeding steps.

It is another object of the present invention to provide paper serving as a card substrate, which can satisfy the coating suitability of coating composition, rigidity, and printability.

Still another object of the present invention is to provide a laminate in which at least one base paper and at least one substrate that is different from the base paper in material, form or the like are stacked without substantially applying any adhesive, and then integrated by high-pressure treatment.

Another object of the invention is to provide a laminate usable as a card substrate.

Another object of the present invention to provide a multi layer paper that is excellent in dimensional stability, decreases the number of manufacturing steps, is inexpensive, and have excellent rigidity, coating suitability of coatings and printability.

Another object of the invention to provide the above multilayer paper as a card substrate.

The present invention provides a structure of at least one layer and the structure comprises at least one layer containing synthetic fiber, which is obtained by high-pressure treatment through a nip provided by a metal roll and another metal roll under a linear pressure in the range of 200 to 3500 kg/cm.

For example, the present invention provides paper excellent in dimensional stability which is obtained by passing paper containing synthetic fiber through a nip provided by a metal roll and another metal roll under a linear pressure in the range of 200 to 3500 kg/cm.

When the proportion of synthetic fiber contained is not less than 3 % by weight, more excellent dimensional stability is obtained. When that proportion is in the range of 3 to 70 % by weight, paper excellent in writability as well as dimensional stability can be obtained.

When synthetic fiber contained is at least one of polyolefin fiber, aliphatic or aromatic polyester fiber, and composite fiber comprising these, it is possible to obtain paper particularly excellent in dimensional stability.

When the linear pressure in a nip provided by a metal roll and another metal roll is in the range of 500 to 3500 kg/cm, paper having more excellent dimensional stability is obtained.

By providing a water-soluble or water-dispersible resin (hereinafter referred to "aqueous resin") layer on at least one side, it is able to obtain paper having high smoothness and dimensional stability.

By adding pigment into an aqueous resin layer, it is able to obtain paper excellent in dimensional stability which has more improved smoothness and printability.

By laminating a high-molecular-weight film on at least one side through an adhesive layer, it is able to obtain paper having high smoothness and dimensional stability.

When a high-molecular-weight film is a biodegradable film, it is able to obtain paper excellent in dimensional stability which is rapidly decomposed by microorganisms.

By providing a resin layer curable by ionizing radiation on at least one side, it is able to obtain paper excellent in dimensional stability which has high luster and rigidity.

When the above papers excellent in dimensional stability are employed as a card substrate, they exhibit excellent performance.

We have conducted research on conditions for obtaining paper excellent in dimensional stability and found that when paper made from natural fiber pulp and synthetic fiber is treated under a high-pressure not available by conventional supercalenders or machine calenders, the treatment readily gives filmlike rigidity having high density, and also discovered that paper for card substrate satisfying rigidity and printability, could be obtained by providing a water-soluble resin layer before or after high-pressure treatment, laminating a high-molecular-weight film, or providing a resin layer curable by ionizing radiation. The present invention was thus accomplished by the above findings.

The term dimensional stability as used herein refers to the magnitude of elongation of the paper when the paper is immersed in water, and is expressed in terms of expansion of paper when immersed in water. The paper prepared according to the invention is preferably up to 0.6% , more preferably in the range of 0 to 0.5% , in expansion of paper when immersed in water with respect to the cross direction. The expansion of paper when immersed in water was measured by a method based on J. TAPPI No. 27, B Method.

In the description given below, the term "card substrate" is understood to mean substrates for use in identification cards, driver's licenses, ID cards, IC cards, bank cards, credit cards, magnetic recording cards, and the like.

Examples of synthetic fiber used in the present invention are polyolefin fibers, such as polyethylene, polypropylene, ethylene-propylene copolymer, polystyrene, and ethylene-vinyl acetate copolymer; halogen containing polymers, such as polyvinyl chloride, polyvinylidene chloride, vinyl chloride-vinyl alcohol copolymer, and vinyl chloride-vinyl acetate copolymer; polyamide fibers, such as nylon 6, and nylon 66; aliphatic polyester fibers, such as polyethylenesuccinate, polybutylenesuccinate, polycaprolactone, polylactic acid, polyhydroxybutylatevalilate copolymer; aromatic polyester fibers, such as polyethylene terephthalate, and polybutylene terephthalate; acrylonitrile fibers; acrylic fibers, such as copolymer comprising acrylonitrile and vinyl monomer, e.g., vinyl acetate, methyl acrylate, acrylic acid, sodium allylsulfonate, or sodium styrenesulfonate; and vinylon fibers.

In addition, there are exemplified synthetic pulp in which a synthetic high-molecular-weight compound is formed into a multi-branched fiber similar to wood pulp; and composite fibers, such as the core-sheath type in which a low-melting-point component ($80 \sim 140°C$) and a high-melting-point component ($150 \sim 250°C$) are arranged on the eccentric or concentric circle, respectively; the side-by-side type in which both components are arranged side by side; the windmill type or the lamination type in which both components alternate; the multicore type whose core component is a fiber forming component; and the incorporated type in which both components are merely mixed and subjected to melt spinning. As the combination of a low-melting-point component and a high-melting-point component, there are exemplified: polyethylene and polypropylene; a modified polypropylene and polypropylene; ethylene-vinyl acetate copolymer and polypropylene; polyethylene and polyethylene terephthalate; polypropylene and polyethylene terephthalate; and polyethylene terephthalate modified products and polyethylene terephthalate.

Preferred are polyolefin fibers, biodegradable aliphatic polyester fibers, aromatic polyester fibers, halogen- containing polymers, and composite fibers comprising a low-melting-point component and a high-melting-point component which are composed of these fibers. More preferred are polyester fibers. The above-mentioned synthetic fibers can be used in the combination of at least two of them.

The amount of synthetic fiber used in the present invention is not particularly limited, however, it is desirable to add not less than 3% by weight in order to ensure the effect of dimensional stability. Below 3% by weight, the effect of dimensional stability becomes lessened.

As the proportion of synthetic fiber increases, the effect of dimensional stability tends to be improved. However, from the viewpoints of writability and the dispersibility of synthetic fiber, the amount of synthetic fiber is preferably in the range of 3 to 70% , more preferably 5 to 50% , with respect to the overall fiber amount.

The length of synthetic fiber used in the present invention is preferably not more than 50 mm. Over 50 mm, it is difficult to disperse in an aqueous suspension, as a paper material. This leads to the formation of flocks, failing to obtain paper having a uniform formation.

The pulp to be used is not limited specifically. Examples of useful pulps are chemical pulps, such as softwood bleached kraft pulp (hereinafter referred to as "NBKP") and hardwood bleached kraft pulp (hereinafter referred to as "LBKP"), which are usually used, mechanical pulps such as GP, BCTMP and MP, pulps prepared from non-wood materials such as kenaf and hemp, pulps such as DIP, etc.

The internal and surface sizing agents for the paper for use in the present invention are not limited specifically; rosin sizing agents, starches, PVA, etc. are usable suitably. Further use of paper strength agents such as polyamide-epichlorohydrin resin tends to result in improved expansion of paper when immersed in water.

The degree of beating of natural pulps used in the invention is in the range of at least 200 to 700 ml, more preferably 350 to 650 ml, according to Canadian standard freeness (hereinafter referred to as "CSF")

The stock used in the invention is made into paper by Fourdrinier paper machine with cylinder dryers, Fourdrinier Yankee paper machine, cylinder paper machine, tanmo paper machine, tanmo Yankee paper machine, or the like. Insofar as the advantages of the present invention are not impaired, organic and inorganic fillers, chemicals (auxiliary agents) and the like may be used.

Examples of useful fillers are inorganic pigments such as kaolin, talc, clay, calcium carbonate, calcined clay, titanium oxide, kieselguhr, finely divided anhydrous silica, activated clay, zinc oxide, aluminum oxide, aluminum hydroxide, zinc sulfate, barium sulfate, silicon dioxide and colloidal silica, and organic pigments such as urea-formalin resin filler, nylon powder and polyethylene powder.

Next, paper containing synthetic fiber of not less than 3% by weight is passed through a nip provided by a metal roll and another metal roll under a linear pressure ranging from 200 to 3500 kg/cm, more preferably from 500 to 3500 kg/cm. With the treatment under the above conditions, the interstices between fibers are extremely diminished to provide paper having high density. Below 200 kg/cm, a desired effect cannot be obtained. Over 3500 kg/cm, the effect is saturated and thus inefficient.

The rolls for use in the high-pressure treatment of paper preferably have a temperature of 20 °C to 300 °C, although suitably selected depending on the kind of synthetic fiber used. If the roll temperature is lower than 20 °C, condensation of water vapor generally occurs on the surfaces of the rolls partly because of the influence of the atmospheric temperature, and an operational problem is likely to arise, hence an undesirable result. Since the quantity of heat to be transferred from the rolls to the material paper varies with the speed of passage of the paper, blisters would develop when the speed is low even if the roll temperature is in the preferable temperature range of up to 300 °C. Generally when the temperature is above 300 °C, however, the water in the material paper vaporizes at a time, markedly inflating the paper, locally permitting the paper to separate off to form blisters on the surface and presenting difficulty in giving uniform paper.

Although the speed of passage of the paper according to the invention is closely related with the temperature as mentioned above and can not be strictly determined, the speed is preferably 10 to 500 m/min. If the speed is over 500 m/min, it is difficult to obtain the desired effect since the heat and pressure then will not be sufficiently transmitted to the paper.

The water content of the substrate to be subjected to the pressure treatment is preferably 1 to 15%, more preferably 5 to 10%. The treatment then effectively affords paper of excellent smoothness. If the water content is less than 1%, it is difficult to obtain paper of desired effect, whereas when the value is over 15%, the fibers swell to excess, failing to give uniform paper due to localized elongation.

The base paper passed through a nip provided by a metal roll and another metal roll has smooth surface and low air permeability, as well as excellent rigidity and elasticity.

The thickness of basic paper can be altered by changing the papermaking conditions. Even if the minimum amount of papermaking is conducted by a papermaking machine, it results in large quantities of paper, which is uneconomical. It is possible to obtain a substrate of an arbitrary thickness by conducting papermaking to obtain paper, and conducting high-pressure treatment to laminate a plural of papers. Further, when a layer containing an aqueous resin is provided on one side of paper after paper making, it is possible to obtain a substrate of an arbitrary thickness by placing the other side of this paper so as to oppose to the other side of another paper, and conducting high-pressure treatment to laminate them with each other. The reason for this seems that when stacked sheets pass through a nip provided by a metal roll and another metal roll under a linear pressure ranging from 200 to 3500 kg/cm, adjoining fibers in the surface of a base paper are brought into contact with each other and then entangled by high pressure and, at the same time, the intermolecular hydrogen bonds in the fibers act, thus bonding the sheets. More than two sheets can be stacked.

In the invention it is essential to add a synthetic fiber. Compared to paper free from synthetic fiber, paper containing a synthetic fiber has lower smoothness and printability in a succeeding step for preparing a card substrate. Therefore, it is desirable to provide a layer containing an aqueous resin.

Examples of aqueous resins are a completely or partially-saponified polyvinyl alcohol; acetoacetylated polyvinyl alcohol in which acetoacetyl group is introduced by, for example, reacting polyvinyl alcohol with diketene; the reactants between polyvinyl alcohol and polycarboxylic acid, e.g., fumaric acid, phthalic anhydride, trimellitic anhydride, or itaconic acid anhydride; and esterification products of these reactants; carboxy-modified polyvinyl alcohol, which is a saponification product of copolymers of vinyl acetate and ethylenically unsaturated carboxylic acid, e.g., maleic acid, fumaric acid, itaconic acid, crotonic acid, acrylic acid, or methacrylic acid; silicon-modified polyvinyl alcohol, sulfonic acid-modified polyvinyl alcohol obtained as a saponification product of the copolymer of vinyl acetate and ethylene sulfonic acid, acrylic sulfonic acid, allyl sulfonic acid, or their salts; olefin-modified polyvinyl alcohol that is obtained by saponiffing the copolymer of vinyl acetate and olefin, e.g., ethylene, propylene, isobutylene, $\alpha$-octene, $\alpha$-dodecene, or $\alpha$-octadodecene; nitrile-modified polyvinyl alcohol that is obtained by saponiffing the copolymer of vinyl acetate and acrylonitrile or methacrylonitirile; amide-modified polyvinyl alcohol obtained by saponifing the copolymer of vinyl acetate and amide, e.g., acrylamide or methacrylamide; pyrrolidone-modified polyvinyl alcohol obtained by saponifing the copolymer of vinyl acetate and N-vinylpyrrolidone, and like polyvinyl alcohols; cellulose derivatives, e.g., methyl cellulose, ethyl cellulose, hydroxyethyl cellulose, and carboxymethyl cellulose; casein; gum arabic; starches, e.g., oxidized starch, etherificated starch, dialdehyde starch, esterificated starch; styrene-butadiene copolymer emulsion; vinyl acetate-vinyl chloride-ethylene copolymer emulsion; and metacrylate-butadiene copolymer emulsion.

Preferred are various modified polyvinyl alcohols, cellulose derivatives and casein. More preferred are acetoacetylated polyvinyl alcohol, carboxy-modified polyvinyl alcohol and silicon-modified polyvinyl alcohol.

It is desirable to add pigment into a layer containing an aqueous resin. The addition of pigment into an aqueous resin layer can enhance printability as a card substrate in the succeeding steps. Examples of pigments are those as exemplified as the filler used in papermaking, as previously described. The mean particle size of pigment is preferably in the range of from 0.2 to 3 $\mu$m. In general, it is added in the range of from 5 to 500 parts by weight, preferably 80 to 350 parts by weight, per 100 parts by weight of a resin component.

In the high-pressure treatment with a nip provided by a metal roll and another metal roll, in some cases it is hard to separate treated paper from the rolls. To facilitate its separation, when an aqueous resin layer is provided on the surface to be in contact with metal rolls, a mold releasing agent may be added into the aqueous resin layer. Examples of mold releasing agents are hydrocarbons, fatty acids, higher alcohols, fatty acid amides, esters, metal soaps, and the mixtures of these. It is necessary to add a proper amount of these, depending on the type.

A coating composition containing an aqueous resin is thoroughly mixed and dispersed as required, by using a mixer or stirrer, such as mixers, attritors, ball mills, or roll mills, and then applied to the surface of paper by any known applicator.

The amount of coating composition is not particularly limited, however, it is preferably from 0.1 to 30 g/m$^2$ in dry weight, more preferably from 0.5 to 15 g/m$^2$. Below 0.1 g/m$^2$, a sufficient effect desired in the invention cannot be obtained. Over 30 g/m$^2$, the effect is saturated and thus uneconomical.

The application method of coating composition is also not particularly limited, and the well-known techniques can be employed. A coating layer is formed by applying a coating composition by means of bar coating, air knife coating, rod blade coating, pure blade coating, short dwell coating, or the like, and then drying.

The method of laminating a high-molecular-weight film through adhesive is not particularly limited and the well-known techniques can be employed. For instance, wet lamination, hotmelt lamination, or dry lamination method is suitably employed. In the wet lamination, usually an aqueous adhesive or a water-dispersible adhesive is applied and laminated during its wet state to integrate, which is then evaporated and dried to remove the water in the adhesive to complete their bonding, followed by winding up. In the dry lamination, after an aqueous or solvent-type adhesive is applied and dried, paper is laminated to the surface of the adhesive. In the hotmelt lamination, while a thermoplastic resin containing neither water nor solvent which is the solid state at ordinary temperature, is melten with heat, it is laminated in the melten state by using an applicator, followed by cooling and solidification. Preferred method is the dry lamination.

As to the adhesive for laminating a high-molecular-weight film in the invention, a suitable one may be selected depending on the lamination method. As the adhesive for dry lamination, there are, for example, the solvent-type, aqueous type, and UV type. Specifically, ethylene vinyl alcohol type, polyester type, urethane type, acrylic type, modified acrylic type, and modified urethane type can be used.

Examples of high-molecular-weight films are those from methyl cellulose, ethyl cellulose, carboxymethyl cellulose, methoxy cellulose, hydroxy cellulose, polyvinyl alcohols, e.g., completely (or partially) saponified polyvinyl alcohol, carboxy-modified polyvinyl alcohol, ethylene-vinyl alcohol copolymer, silicon-modified polyvinyl alcohol and the like, polyethylene, polypropylene, polyethylene terephthalate, polyethylene naphthalate, polystyrene, polyvinyl chloride, polyvinylidene chloride, or nylon; biodegradable films, e.g., "DOLON" (film made from chitosan, cellulose and starch, Aicello Chemical Co., Ltd.); "BIONOLLE" (film of polybutylenesuccinate, Showa Kobunshi Co., Ltd.); "Placcel" (film of polycaprolactone, Daicel Chemical Industry Co., Ltd.); "Mater-Bi" (film of starch and a modified polyvinyl alcohol, The Nippon Synthetic Chemical Ind. Co., Ltd.); "LACTY" (film of polylactic acid, Shimadzu Seisakusho Ltd.); and "LUNALE" (film of cellulose acetate, Nippon Shokubai Co., Ltd.). Among the above high-molecular-weight films, biodegradable films are preferred from a viewpoint of influence to the environment.

As a resin curable by ionizing radiation, there are, for example, prepolymers, monomers and oligomers as described below, and the mixtures of these.

(A) radical-polymerizable monofunctional monomers such as acrylic acid, ethyl acrylate, hexyl acrylate, 2-ethylhexyl acrylate, 2-hydroxyethyl acrylate, 2-hydroxypropyl acrylate, tetrahydrofurfuryl acrylate, pheoxyethyl acrylate, tolyloxyethyl acrylate, nonylpheoxyethyl acrylate, tetrahydrofurfuryloxyethyl acrylate, 1,3-dioxolan acrylate, pheoxydiethylene glycol acrylate, benzyl acrylate, butoxyethyl acrylate, cyclohexyl acrylate, dicyclopentanyl acrylate, dicyclopentenyl acrylate, glycidyl acrylate, carbitol acrylate and isobornyl acrylate;

(B) radical-polymerizable multi functional monomers such as 1,6-hexanediol diacrylate, neopentyl glycol diacrylate, diethylene glycol diacrylate, tripropylene glycol diacrylate, dicyclopentanyl diacrylate, butylene glycol diacrylate, pentaerythritol diacrylate, trimethylolpropane triacrylate, propylene oxide-modified trimethylolpropane triacrylate, pentaerythritol triacrylate, ditrimethylolpropane tetracrylate, dipentaerythritol hexacrylate, caprolactone-modified dipentaerythritol hexaacrylate and tetramethylolmethane tetraacrylate; and

(C) radical-polymerizable oligomers (prepolymers) such as polyester (poly)acrylate, urethane (poly)acrylate, epoxy (poly)acrylate and polyol (poly)acrylate oligomers.

It is also possible to use cationic polymerizable monomers and/or oligomers, such as 2-chloroethyl vinyl ether, 2-hydroxyethyl vinyl ether, 4-hydroxybutyl vinyl ether, triethylene glycol divinyl ether, and 1,4-cyclohexane-dimethanol divinyl ether.

When mixing a cationic polymerizable monomer and/or oligomer, a cationic polymerization initiator is necessary. Any materials which can initiate cationic polymerization by ionizing radiation irradiation are usable. There are, for example, diazonium salt, iodonium salt, sulfonium salt, and metallocene compounds. These catioinic polymerization initiators are preferably added in the range of about 0.1 to 10 parts by weight, per 100 parts by weight of a cationic polymerizable monomer and/or oligomer. Below 0.1 part by weight, the polymerization initiating capability becomes insufficient. Over 10 parts by weight, the effect is saturated, resulting in poor solubility of cationic polymerisation initiator. This may cause adverse effects that the transparency of coating film is degraded, and the like.

A resin curable by ionizing radiation is preferably applied in the range of 0.1 to 10 g/m$^2$, more preferably 0.5 to 5 g/m$^2$. Below 0.1 g/m$^2$, it fails to cover the surface, resulting in poor coating suitability of magnetic coating composition or the like, and poor printability. Over 10 g/m$^2$, a large quantity of ionizing radiation energy is required for curing a coating layer, alternatively, monomers remain due to poor curing.

Examples of ionizing radiations are electron beam, ultraviolet rays, $\alpha$ rays, $\beta$ rays, $\gamma$ rays and X rays. Alpha rays, beta rays, gamma rays and X rays have the problem of being hazardous to the human body, so that the electron beam or ultraviolet rays are preferable to use, which are easy to handle and widely used in industries.

When electron beam is employed as ionizing radiation, it is desirable to adjust the quantity of electron beam so that the absorbed dose ranges from approximately 1 to 200 kGy. Below 1 kGy, a sufficient irradiation effect cannot be obtained. Irradiation of over 200 kGy is undesirable because it may deteriorate the substrate of the invention. As the method of irradiating electron beam, scanning, curtain beam, or broad beam method is employed. It is necessary to control the accelerating voltage in irradiating electron beam, depending on the substrate thickness. Appropriate accelerating voltage ranges from approximately 150 to 300 kV. Since little or no heat is applied at irradiation, it is easy to adjust coloring and sheet curling due to heat.

The paper thus obtained which is excellent in dimensional stability can be used in widely diverse fields. When used as a card substrate, it exhibits excellent performance in dimensional stability, rigidity, folding endurance, and printability.

The present invention provides a structure wherein the structure is at least two layers and the layer containing synthetic fiber is made from at least one of a synthetic high-molecular-weight compound and a semi-synthetic high-molecular-weight compound, and the layer is in the form of a film or fiber sheet, and other layer is paper, and these are stacked and integrated by passing them through a nip provided by a metal roll and another metal roll in a linear pressure of from 200 to 3500 kg/cm.

For example, the present invention provides a laminate characterized in that at least one base paper and at least one substrate different from the base paper in material, form or the like are stacked and integrated by passing them through a nip provided by a metal roll and another metal roll in a linear pressure of from 200 to 3500 kg/cm, without substantially applying any adhesive. When the linear pressure in the nip is in the range of from 500 to 3500 kg/cm, further improved effects can be obtained.

According to the invention, a laminate having excellent performance is obtained when the material of a substrate is at least one of a synthetic high-molecular-weight compound and a semi-synthetic high-molecular-weight compound, and the substrate is in the form of a film or fiber sheet.

According to the invention, a laminate having excellent performance is obtained when the material of a substrate is at least one of a synthetic high-molecular-weight compound and a semi-synthetic high-molecular-weight compound, each containing a natural pulp, and the substrate is in the form of a fiber sheet.

When synthetic or semi-synthetic high-molecular-weight compounds are biodegradable, the obtained laminate is decomposed by microorganisms even if it is abandoned after use in the natural environment.

When a film of a synthetic high-molecular-weight compound is ethylene-vinyl alcohol copolymer film, a laminate having a further improved performance is obtained.

Specifically, one of the features of the present invention is that a base paper and a variety of substrates are integrated by high-pressure treatment without substantially employing any adhesive.

Preferably, an aqueous resin layer is provided on at least one side of the obtained laminate. More preferably, the aqueous resin layer contains pigment. Most preferably, a resin layer curable by ionizing radiation is provided on the aqueous resin layer.

The laminate thus obtained exhibits excellent performance when used as a card substrate.

Based on the fact that the high-pressure treatment to stacked papers of more than two sheets leads to their integration without substantially employing any adhesive, the present inventors had studied about not only the combination of papers but also various substrates, to discover that by stacking at least one base paper and at least one substrate different from the base paper in material, form or the like, and by passing them through a nip provided by a metal roll and another metal roll in a linear pressure in the range of from 200 to 3500 kg/cm, the base paper and the substrate were integrated without substantially applying any adhesive.

In the present invention, the phrase "a substrate different from a base paper" means that the substrate is different from the base paper in material, form or the like. The substrate is, for example, a synthetic or semi-synthetic high-molecular-weight compound in the form of a film or fiber sheet. Fiber may be in the form of a sheet, alternatively, fiber itself may be scattered over a base paper.

As the paper of a substrate different from a base paper in the present invention, those which are exemplified as a base paper are substantially used. The difference from the base paper is that a pattern is defined by printing or the like on the surface of paper or the like. The paper thus obtained and a base paper are superposed with the printing surface facing the base paper, and then subjected to the high-pressure treatment of the present invention, to obtain a laminate sealing the printed pattern. This laminate is characterized in that the contents are visible from the outside and a watermarked pattern is provided thereby it is difficult to alter printed matters.

It is also possible to use a watermarked paper. When such a paper is stacked together with a base paper and subjected to the high-pressure treatment of the present invention, a laminate having a watermark is obtained. By selecting the thickness of a base paper to be stacked, it is possible to produce a laminate having a watermark, the thickness of which is adjustable.

The constructions of the laminate of the present invention can be grouped into the units of: a base paper and a substrate; a plurality of base papers and substrates interposed therebetween; and plurality of substrates and base papers interposed therebetween. In addition, there are every variety of combinations, for example, plural types of these units may be combined; stacked base papers may be stacked on a substrate; or stacked substrates may be stacked on a base paper.

A laminate in which a base paper and a substrate different from the base paper are integrated produces physical properties distinct from those resulting from the combination of the physical properties inherent to each of the base paper and the substrate. For instance, the integration may improve the rigidity and strength, alternatively, may give other characteristic features.

In the present invention, the phrase "without substantially applying any adhesive" means that no adhesive is applied for bonding a base paper to a substrate different from the base paper. That is, a coating layer of a coating paper or the like, generally contains adhesive referred to as binder, for bonding pigments to a body paper. However, in the case where a base paper is opposed to the coating layer surface of a coating paper and then subjected to the high-pressure treatment, the adhesive in the coating layer does not act to bond the base paper to the coating paper, and hence no adhesive is substantially applied.

The laminates of the present invention are suitably used in wrapping papers and in the field of design. Particularly, the laminates in which a film or a fiber sheet of a synthetic high-molecular-weight compound is employed as a substrate, are superior to usual papers in dimensional stability, permitting the use as a substrate for cards, e.g., identification cards, driver's licenses, membership cards, magnetic recording cards, and IC cards.

As the base paper used in the present invention, there are wood free paper and the like. Examples of the pulp used therein are chemical pulps, such as NBKP and LBKP which are usually used, and mechanical pulps, such as GP, BCTMP, and MP. It is also possible to use wood-containing paper containing pulp obtained from non-wood materials, e.g., kenaf, or DIP, alternatively, paper that is obtained by making a stock into a sheet at neutrality. Further, a coating paper provided with a coating layer containing pigment is also usable.

Insofar as the advantages of the present invention are not impaired, a binder, internal sizing agent or surface sizing agent can be added into a base paper, without particular limitations. Examples of binders are starches, such as oxidized starch, enzyme-modified starch, cation-modified starch, esterificated starch, and etherificated starch; methyl cellulose, ethyl cellulose, carboxymethyl cellulose, methoxy cellulose, hydroxy cellulose; polyvinyl alcohols, such as completely (or partially) saponified polyvinyl alcohol, carboxy-modified polyvinyl alcohol, and silicon-modified polyvinyl alcohol; polyacrylamide, polyvinylpyrrolidone, acrylamide-acrylic ester copolymer, acrylamide-acrylic ester-methacrylic acid copolymer; water-soluble high-molecular-weight compounds, such as alkali salt of styrene-maleic anhydride copolymer, alkali salt of isobutylene-maleic anhydride copolymer, and casein; latex, such as polyvinyl acetate, polyurethane, polyacrylate, polyacrylic ester, polybuthylmethacrylate, styrene-butadiene copolymer, vinyl chloride-vinyl acetate copolymer, and styrene-butadiene-acrylic copolymer. As a sizing agent, rosin sizing agent, alkenylsuccinic anhydride, or the like may be used as required.

Insofar as the advantages of the present invention are not impaired, organic or inorganic fillers can be used. The same fillers as mentioned above are usable.

Examples of synthetic high-molecular-weight compound used in the present invention are polyethylene, polypropylene, polyvinyl alcohol, ethylene-propylene copolymer, polystyrene, ethylene-vinyl acetate copolymer; halogen-containing polymers, such as polyvinyl chloride, polyvinylidene chloride, and vinyl chloride-vinyl alcohol copolymer; polyhydroxybutylate-valilate copolymer, ethylene-vinyl alcohol copolymer; aromatic polyesters, such as polyethylene terephthalate, and polybutylene terephthalate; copolymers of acrylonitrile and vinyl monomer, such as vinyl acetate, methyl acrylate, acrylic acid, sodium allylsulfonate, or sodium styrenesulfonate. These synthetic high-molecular-weight compounds are formed into a film or fiber, and then stacked on a base paper.

In particular, when a film of synthetic high-molecular-weight compound is composed of ethylene-vinyl alcohol copolymer, it is possible to obtain a laminate having low oxygen permeability, which cannot be attained by using paper alone.

The fiber of the above synthetic high-molecular-weight compound, i.e., synthetic fiber, may be directly placed on a base paper, or formed into a sheet. The synthetic fibers used in the present invention include a synthetic pulp in which a synthetic high-molecular-weight compound is formed into a multi-branching fiber similar to wood pulp. These synthetic fibers may be mixed with a natural pulp or the like, and then formed into a sheet.

As a synthetic high-molecular-weight fiber, there are composite fibers, such as the core-sheath type in which a low-melting-point component (80~140°C) and a high-melting-point component (170~250°C) are arranged on the eccentric or concentric circle, respectively; the side-by-side type in which both components are arranged side by side; the windmill type or the lamination type in which both components alternate; the multicore type whose core component is a fiber forming component; and the incorporated type in which both components are merely mixed and subjected to melt spinning. As the combination of a low-melting-point component and a high-melting-point component, there are exemplified:

polyethylene and polyethylene terephthalate; polypropylene and polyethylene terephthalate; and polyethylene terephthalate modified product and polyethylene terephthalate.

Particularly preferred are polyolefin fibers, biodegradable aliphatic polyester fibers, aromatic polyester fibers, and composite fibers comprising a low-melting-point component and a high-melting-point component which are composed of these fibers. The above-mentioned synthetic fibers can be used in the combination of at least two of them.

Synthetic fiber that is formed into a sheet after mixing with a natural pulp and the like, preferably has a length of not more than 50 mm. Over 50 mm, it is difficult to disperse in an aqueous suspension, as a paper material, to cause flocks and thus fail to obtain paper having a uniform formation.

When a substrate is a fiber sheet, the proportion of a high-molecular-weight fiber preferably ranges from 10 to 100 %, based on the fibers contained in the substrate sheet. Below 10 %, it is difficult to obtain the effect due to the addition of a synthetic high-molecular-weight fiber. In the event of adding polyester fiber, dimensional stability is poor when its proportion is below 10%, and dimensional stability increases with increasing the proportion.

As the biodegradable film used in the present invention, there are films of, such as polybuthylenesuccinate, polycaprolacton, polylactic acid, or cellulose acetate. As the biodegradable fiber of synthetic fiber used in the present invention, those which are obtained from the fibrillation of the material of the above-mentioned biodegradable film can be used.

By providing an aqueous resin layer on at least one side before or after the high-pressure treatment, the surface smoothness is further increased to provide a laminate having excellent coating suitability of various coatings used in the succeeding steps, as well as adhesiveness and printability.

Same aqueous resins as above are usable. Preferred are various modified polyvinyl alcohols, cellulose derivatives and casein. More preferred are acetoacetylated polyvinyl alcohol, carboxy-modified polyvinyl alcohol and silicon-modified polyvinyl alcohol.

It is desirable to add pigment into a layer containing an aqueous resin in order to enhance smoothness and printability. Examples of pigments are inorganic pigments, such as kaolin, talc, clay, calcium carbonate, calcined clay, titanium oxide, kieselguhr, finely divided anhydrous silica, activated clay, zinc oxide, alminum oxide, alminum hydroxide, zinc sulfate, barium sulfate, silicon dioxide, colloidal silica, muscovite, sericite, phlogopite, and biotite; and organic pigments, such as urea-formalin resin filler, nylon powder, and polyethylene powder. The mean particle size of these pigments is preferably in the range of from 0.2 to 3 $\mu$m. They are generally added in the range of from 5 to 500 parts by weight, preferably 80 to 350 parts by weight, per 100 parts by weight of a resin component.

In the high-pressure treatment with a nip provided by a metal roll and another metal roll, in some cases it is hard to separate treated laminate from the rolls. To facilitate its separation, when an aqueous resin layer is provided on the surface to be in contact with metal rolls, a mold releasing agent may be added into the aqueous resin layer. Same mold releasing agents as above are usable.

A coating composition containing an aqueous resin is thoroughly mixed and dispersed as required, by using a mixer or stirrer, such as mixers, attritors, ball mills, or roll mills, and then applied to the surface of paper substrate by any known applicator.

By providing an aqueous resin layer on at least one side before or after the high-pressure treatment and also providing a resin layer curable by ionization radiation on the aqueous resin layer, it is possible to obtain a substrate for card excellent in coating suitability of a coating composition for magnetic recording, etc., and printability in the succeeding steps. As the resin curable by ionizing radiation are usable those mentioned above.

It is also possible to use cationic polymerizable monomers and/or oligomers, such as 2-chloroethyl vinyl ether, 2-hydroxyethyl vinyl ether, 4-hydroxybutyl vinyl ether, triethylene glycol divinyl ether, and 1,4-cyclohexane-dimethanol divinyl ether.

When mixing a cationic polymerizable monomer and/or oligomer, a cationic polymerization initiator is necessary. Any materials which can initiate cationic polymerization by ionizing radiation irradiation are usable. There are, for example, diazonium salt, iodonium salt, sulfonium salt, and metallocene compounds. These catioinic polymerization initiators are preferably added in the range of about 0.1 to 10 parts by weight, per 100 parts by weight of a cationic polymerizable monomer and/or oligomer. Below 0.1 part by weight, the polymerization initiating capability becomes insufficient. Over 10 parts by weight, the effect is saturated, resulting in poor solubility of cationic polymerization initiator. This may cause adverse effects that the transparency of coating film is degraded, and the like.

A resin curable by ionizing radiation is preferably applied in the range of 0.1 to 10 g/m$^2$, more preferably 0.5 to 5 g/m$^2$. Below 0.1 g/m$^2$, it fails to cover the surface, resulting in poor coating suitability of magnetic coating composition or the like, and poor printability. Over 10 g/m$^2$, a large quantity of ionizing radiation energy is required for curing a coating layer, alternatively, monomers remain due to poor curing.

Same ionizing radiations, the quantity of ionizing radiation, method of irradiation, accelerating voltage as above are usable.

Insofar as the advantages of the present invention are not impaired, an intermediate layer may be disposed between a substrate and a base paper as required, e.g., for increasing whiteness. As pigment used for intermediate layer, those which are exemplified as fillers in the foregoing description can be used, and they preferably have a mean particle size of not more than 2.0 μm.

In addition, binders are usually added into an intermediate layer in order to bond pigments. Examples of binders are starches, hydroxyethyl cellulose, methyl cellulose, carboxymethyl cellulose, gelatin, casein, gum arabic, polyvinyl alcohol, acetacetyl group-modified polyvinyl alcohol, carboxyl group-modified polyvinyl alcohol, silicon-modified polyvinyl alcohol, diisobutylene-maleic anhydride copolymer salt, styrene-maleic anhydride copolymer salt, ethylene-acrylic acid copolymer salt, styrene-acrylic acid copolymer salt, styrene-butadiene copolymer emulsion, urea resin, melamine resin, and amide resin. The binder is preferably contained in the range of from 5 to 500 parts by weight, more preferably from 10 to 300 parts by weight, per 100 parts by weight of the above-mentioned pigment. An intermediate layer is usually applied in the range of from 0.1 to 10 g/m$^2$, preferably 1.0 to 8 g/m$^2$.

The rolls for use in the high-pressure treatment preferably have a temperature of 20 °C to 300 °C. If the roll temperature is lower than 20 °C, condensation of water vapor generally occurs on the surfaces of the rolls partly because of the influence of the atmospheric temperature, and an operational problem is likely to arise. Since the quantity of heat to be transferred from the rolls to the laminate varies with the speed of passage of the paper, blisters would develop when the speed is low even if the roll temperature is in the preferable temperature range of up to 300 °C. Generally when the temperature is above 300 °C, however, the water in the laminate vaporizes at a time, markedly inflating the laminate, locally permitting a part of base paper or substrate to separate off to form blisters on the surface and presenting difficulty in giving uniform laminate.

Although the speed of passage of the laminate according to the invention is closely related with the temperature as mentioned above and can not be strictly determined, the speed is preferably 10 to 500 m/min. If the speed is over 500 m/min, it is difficult to obtain the desired effect since the heat and pressure then will not be sufficiently transmitted to the laminate.

When a base paper or a substrate is a paper, the amount of water at the time of press is preferably in the range of from 2 to 15 %, more preferably 5 to 10 %, which permit an efficient production of laminate. Below 2 %, the entanglement between fibers is poor and thus fails to obtain the desired effects. Over 15 %, fiber has too much swelling to cause the phenomenon that part of the fiber extends, making it difficult to obtain a uniform laminate.

The desirable effects of the present invention cannot be obtained when the linear pressure of a nip is less than 200 kg/cm. Over 3500 kg/cm, the effects are saturated, resulting in poor efficiency. A further improved laminate is obtained in the range of from 500 to 3500 kg/cm.

The laminate obtained by passing through a nip provided by a metal roll and another metal roll has a smooth surface and low air permeability and exhibits excellent rigidity and elasticity. It is therefore possible to form printing layers and protective layers without any problems.

The invention provides a structure wherein the structure is at least three layers and the structure is a multilayer combination paper comprising at least one layer containing synthetic fiber, and the multilayer combination paper is passed through a nip provided by a metal roll and another metal roll under a linear pressure ranging from 200 to 3500 kg/cm, and the density of the multi layer combination paper ranges from 0.9 to 1.6 g/cm$^3$.

For example, the invention provides a multilayer combination paper comprising three or more paper layers which has at least one paper layer containing a natural pulp and synthetic fiber, and the multilayer paper being obtained by passing a multi layer paper prepared by combination papermaking method through a nip provided by a metal roll and another metal roll under a linear pressure ranging from 200 to 3500 kg/cm. The density of this multilayer paper ranges from 0.9 to 1.6 g/cm$^3$.

The invention also provides a multilayer paper in which the amount of synthetic fiber contained in each of two outermost paper layers does not exceed that of at least one intermediate layer surrounded by the two outermost paper layers.

The invention also provides a multi layer paper in which at least one of two outermost paper layers contains no synthetic fiber.

Tee present invention was accomplished when the present inventors had various studies about the blending of synthetic fibers for enhancing dimensional stability, rigidity, coating suitability of coatings in magnetic recording layer and the like, and printability, to discover that multilayer papers excellent in dimensional stability, rigidity, coating suitability of coatings and printability can be obtained by placing a paper layer containing a synthetic fiber inside a multilayer combination paper, and making outermost layers contain no synthetic fiber or less synthetic fiber than that in an inner paper layer, followed by high-pressure treatment. That is, a multilayer combination paper which comprises an inner paper layer containing a synthetic fiber and outermost layers containing no synthetic fiber or less synthetic fiber than that in the inner paper layer, is subjected to a high-pressure treatment, by passing it through a nip provided by a metal roll and another metal roll under a liner pressure ranging from 200 to 3500 kg/cm. This reduces the interstices between natural pulp fibers so that density is increased, and also produces stronger bonding between the layers of the multilayer combination paper. This high-pressure treatment enhances surface smoothness while maintaining high dimensional stability. The term dimensional stability as used herein refers to the magnitude of elongation of the paper when the paper is immersed in water, and is expressed in terms of expansion of paper when immersed in water. The paper prepared according to the invention is preferably up to 0.6%, more preferably in the range of 0 to 0.5%, in expansion of paper when immersed in water with respect to the cross direction.

Preferably, the density after high-pressure treatment ranges from 0.9 to 1.6 $g/cm^3$, more preferably 1.0 to 1.5 $g/cm^3$, most preferably 1.1 to 1.4 $g/cm^3$. Below 0.9 $g/cm^3$, the mechanical strength for use in cards is insufficient. To obtain densities over 1.6 $g/cm^3$, the treatment conditions therefor is strict, making it difficult to practice.

The natural pulp to be used is not limited specifically. Same pulps as above are usable. The internal and surface sizing agents usually used for the paper can be suitably used. Examples thereof are rosin sizing agents, starches, PVA, etc.

The degree of beating of natural pulps used in the invention is in the range of at least 200 to 700 ml, more preferably 350 to 650 ml, according to CSF.

In the present invention the basis weight of outermost layers is preferably not less than 15 $g/m^2$, more preferably not less than 20 $g/m^2$. Below 15 $g/m^2$, it is difficult to perform papermaking. The maximum basis weight of the outermost layers is not particularly limited.

Although the basis weight of an inner layer is not particularly limited, it is preferably not less than 15 $g/m^2$ for the same reason as in the outermost layers.

A synthetic fiber is essentialy blended in the inner layer of the present multilayer combination paper. Same synthetic fibers as above are usable.

In addition, there are exemplified synthetic pulp in which a synthetic high-molecular-weight compound is formed into a multi-branched fiber similar to wood pulp; and composite fibers, such as the core-sheath type in which a low-melting-point component (80~140°C) and a high-melting-point component (150~250°C) are arranged on the eccentric or concentric circle, respectively; the side-by-side type in which both components are arranged side by side; the windmill type or the lamination type in which both components alternate; the multicore type whose core component is a fiber forming component; and the incorporated type in which both components are merely mixed and subjected to melt spinning. As the combination of a low-melting-point component and a high-melting-point component, there are exemplified: polyethylene and polypropylene; a modified polypropylene and polypropylene; ethylene-vinyl acetate copolymer and polypropylene; polyethylene and polyethylene terephthalate; polypropylene and polyethylene terephthalate; and polyethylene terephthalate modified products and polyethylene terephthalate.

Preferred are polyester fibers, biodegradable aliphatic polyester fibers, aromatic polyester fibers, and composite fibers comprising a low-melting-point component and a high-melting-point component which are composed of these fibers. The above-mentioned synthetic fibers can be used in the combination of at least two of them.

The proportion of synthetic fiber contained in an inner layer is not particularly limited, insofar as it should be greater than that in each of the outermost paper layers. The proportion of the synthetic fiber to the overall pulp fiber of an inner layer is preferably in the range of 3 to 80 %, more preferably from 20 to 50 %. Below 3 %, it results in poor dimensional stability. Although, the dimensional stability improves with increasing the proportion of synthetic fiber, there may cause a decrease in smoothness or air permeability.

The length of synthetic fiber used in the present invention is preferably not more than 50 mm. Over 50 mm, it is difficult to disperse in an aqueous suspension, as a paper material. This leads to the formation of flocks, failing to obtain paper having a uniform formation.

The multilayer combination papers used in the present invention may be prepared by any paper machines with the structure there for. There are, for example, Fourdrinier combination paper machine, Fourdrinier cylinder combination paper machine, Fourdrinier tanmo combination paper machine, inverform paper machine, and paper machines in combination of several tanmo and several ultraformers.

Insofar as the advantages of the present invention are not impaired, organic and inorganic fillers, chemicals (auxiliary agents) and the like can be used.

The multilayer papers having the densities as mentioned above can be prepared by high-pressure treatment with a metal roll and another metal roll.

When the linear pressure of a nip provided by a metal roll and another metal roll is not more than 200 kg/cm, desired effects of the invention cannot be obtained. When it exceeds 3500 kg/cm, there may occur the phenomenon that only part of paper extends, making it difficult to obtain a uniform multilayer paper.

The rolls for use in the treatment of paper preferably have a temperature of 20 °C to 300 °C. If the roll temperature is lower than 20 °C, condensation of water vapor generally occurs on the surfaces of the rolls partly because of the influence of the atmospheric temperature, and an operational problem is likely to arise. Since the quantity of heat to be transferred from the rolls to the multilayer paper varies with the speed of passage of the paper, blisters would develop when the temperature transferred to paper exceeds preferable temperature range even if the roll temperature is in the range of up to 300 °C. Generally when the temperature is above 300 °C, however, the water in the paper vaporizes at a time, markedly inflating the paper, locally permitting a part of the paper to separate off to form blisters on the surface and presenting difficulty in giving uniform multilayer paper.

In the multilayer combination paper obtained by the pressure treatment of the present invention, i.e., treated with a nip provided by a metal roll and another metal roll in a linear pressure ranging from 200 to 3500 kg/cm, natural pulp itself is hardly damaged and the interstices between pulp fibers are extremely diminished to provide intimate bonding between the pulp fibers, between synthetic fibers, or between a pulp fiber and a synthetic fiber, entangled in the step of papermaking, thus leading to properties excellent in rigidity, dimensional stability, surface smoothness, interlayer strength, and the like. A remarkable effect of compression is obtained by heating. The reason for this is that cellulose serving as a basic component of paper normally contains water and the glass transition point (Tg) is lowered by the amount of water, compared to the absolute dry condition. Hence, it is assumed that in the high-pressure treatment with metal rolls heated, fibers are liable to deform at lower temperatures because of the lowered Tg, permitting more intimate bonding between the entangled fibers. Therefore, the effects of compression or bonding in the invention can be obtained through heat treatment at temperatures lower than the melting point of synthetic fiber to be blended. This means that the bondings between other fibers and between the layers of a multilayer combination paper are not established only by the melting of synthetic fiber.

In the present invention the speed of treatment is not strictly determined because that is closely related with temperature as stated above. Preferably, that ranges from 1 to 500 m/min. If the speed is over 500 m/min., the temperature and pressure transferred to a multilayer combination paper are insufficient, thereby making it difficult to obtain desired effects.

The water content of multilayer combination paper at the time of the high-pressure treatment preferably ranges from 1 to 15%, more preferably from 3 to 10%, in order to efficiently obtain a multilayer paper excellent in smoothness. Below 1%, no effects are obtained. Over 15%, fiber may swell too much to cause a local expansion of the paper, failing to obtain a uniform multilayer paper.

When the high-pressure treatment is conducted at high roll temperatures, the temperature of paper is increased accordingly. To decrease the temperature of paper, the paper after the high-pressure treatment may be cooled by cooling rolls or the like.

The multilayer paper through the pressure treatment of the invention exhibits excellent smoothness, high interlayer strength, low air permeability, and superior rigidity and elasticity, compared to multilayer papers for which no pressure treatment is conducted.

By providing an aqueous resin layer on at least one side before or after the high-pressure treatment, the surface smoothness is further increased to provide a multilayer paper having excellent coating suitability of magnetic recording coating composition or the like used in the succeeding steps, as well as printability.

Same aqueous resins as above are usable.

Preferred are various modified polyvinyl alcohols, cellulose derivatives and casein. More preferred are acetoacetylated polyvinyl alcohol, carboxy-modified polyvinyl alcohol and silicon-modified polyvinyl alcohol.

It is desirable to add pigment into a layer containing an aqueous resin in order to enhance smoothness and printability. Same pigments as above are usable. The mean particle size of these pigments is preferably in the range of from 0.2 to 3 $\mu$m. They are generally added in the range of from 5 to 500 parts by weight, preferably 80 to 350 parts by weight, per 100 parts by weight of a resin component.

A coating composition containing an aqueous resin is thoroughly mixed and dispersed as required, by using a mixer or stirrer, such as mixers, attritors, ball mills, or roll mills, and then applied to the surface of paper substrate by any known applicator.

By providing an aqueous resin layer on at least one side before or after the high-pressure treatment and also providing a resin layer curable by ionization radiation on the aqueous resin layer, it is possible to obtain a substrate for magnetic recording card or the like excellent in coating suitability and printability of a magnetic recording layer in the succeeding steps. Same resins curable by ionizing radiation as above are usable.

It is also possible to use cationic polymerizable monomers and/or oligomers, such as 2-chloroethyl vinyl ether, 2-hydroxyethyl vinyl ether, 4-hydroxybutyl vinyl ether, triethylene glycol divinyl ether, and 1,4-cyclohexane-dimethanol divinyl ether.

When mixing a cationic polymerizable monomer and/or oligomer, a cationic polymerization initiator is necessary. Any materials which can initiate cationic polymerization by ionizing radiation irradiation are usable. There are, for example, diazonium salt, iodonium salt, sulfonium salt, and metallocene compounds. These catioinic polymerization initiators are preferably added in the range of about 0.1 to 10 parts by weight, per 100 parts by weight of a cationic polymerizable monomer and/or oligomer. Below 0.1 part by weight, the polymerization initiating capability becomes insufficient. Over 10 parts by weight, the effect is saturated, resulting in poor solubility of cationic polymerization initiator. This may cause adverse effects that the transparency of coating film is degraded, and the like.

A resin curable by ionizing radiation is preferably applied in the range of 0.1 to 10 g/m$^2$, more preferably 0.5 to 5 g/m$^2$. Below 0.1 g/m$^2$, it fails to cover the surface, resulting in poor coating suitability of magnetic coating composition or the like, and poor printability. Over 10 g/m$^2$, a large quantity of ionizing radiation energy is required for curing a coating layer, alternatively, monomers remain due to poor curing.

Same ionizing radiations, the quantity of ionizing radiation, method of irradiation, accelerating voltage as above are usable.

The multilayer papers through the pressure treatment of the invention have improved expansion of paper when immersed in water, air permeability, smoothness, rigidity, elasticity, interlayer strength, as well as coating suitability of coatings and printability, which are therefore useful as a card substrate or the like.

The present invention will be described in detail with reference to the following examples, whereas the invention is not limited to these examples. Unless otherwise specified, "part" and "%" in the examples denote "part by weight" and "% by weight", respectively.

Example 1

A stock was prepared by adjusting NBKP to 450 ml in terms of CSF, as a material pulp, adding 30 parts of a polyethylene terephthalate fiber [trade name: Tepyrus TA04N (3d × 5mm), Teijin Ltd.] to 70 parts of NBKP, 0.3% of a rosin size and 1.8% of alum cake to the pulp, and then adding talc to the pulp in an amount of 9.7% calculated as an ash content of paper. The stock was made into paper by a Fourdrinier paper machine with cylinder dryers. In the papermaking step, a liquid containing 6.5% of starch (trade name: Ace A, Oji Corn Starch Co., Ltd.) was applied by a size press to both surfaces of the paper so that it amounted to 2 $g/m^2$ calculated as solids. The obtained paper had 107 $g/m^2$ in basis weight and 222 $\mu$m in thickness. This paper was then passed through a nip provided by a metal roll and another metal roll under a metal roll temperature of 150°C, a linear pressure of 1000 kg/cm and a speed of 20 m/min. The thickness of the resulting paper was 90 $\mu$m.

Example 2

The same procedure as in Example 1 was repeated except that a composite fiber composed of modified polyethylene terephthalate fiber and polyethylene terephthalate fiber [trade name: Tepyrus TJ04CN (1.5d × 5mm), Teijin Ltd.], to obtain a high-pressure treated paper. The paper before pressure treatment had 140 $g/m^2$ in basis weight and 243 $\mu$m in thickness. The thickness after the pressure treatment was 118 $\mu$m.

Example 3

The same procedure as in Example 1 was repeated except that aliphatic polyester fiber [trade name: Daiwabo K (4d × 5mm), Daiwa Spinning Co., Ltd.], to obtain a high-pressure treated paper. The paper before pressure treatment had 189 $g/m^2$ in basis weight and 411 $\mu$m in thickness. The thickness after the pressure treatment was 212 $\mu$m.

Example 4

A stock was prepared by adjusting LBKP to 450 ml in terms of CSF, as a material pulp, adding 20 parts of a composite fiber composed of polyethylene fiber and polypropylene fiber [trade name: ESC864 (2d × 5mm), Chisso Co., Ltd.] to 80 parts of the LBKP, 0.3% of a rosin size and 1.8% of alum cake to the pulp, and then adding talc to the pulp so as to be 9.7% as an ash content of paper. The stock was made into paper by a Fourdrinier paper machine with cylinder dryers. In the papermaking step, a liquid containing 6.5% of starch (trade name: Ace A, Oji Corn Starch Co., Ltd.) was applied by a size press to both surfaces of the paper so that it amounted to 2 $g/m^2$ calculated as solids. The obtained paper had 149 $g/m^2$ in basis weight and 309 $\mu$m in thickness. This paper was then passed through a nip provided by a metal roll and another metal roll under a metal roll temperature of 100 °C, a linear pressure of 1000 kg/cm and a speed of 20 m/min. The thickness of the resulting paper was 135 $\mu$m.

Example 5

The same procedure as in Example 4 was repeated except that a composite fiber composed of modified polypropylene fiber and polypropylene fiber [trade name: EPC (2d × 5mm), Chisso Co., Ltd.] was used in place of the composite fiber composed of polyethylene fiber and the polypropylene fiber. The paper before pressure treatment had 150 $g/m^2$ in basis weight and 333 $\mu$m in thickness. The thickness after the pressure treatment was 157 $\mu$m.

Example 6

The same procedure as in Example 1 was repeated except that 60 parts of NBKP and 40 parts of polypropylene synthetic pulp [trade name: SWP-Y600 (extra thick × 1mm), Mitsui Petrochemical Industries, Ltd.] were used in place of 70 parts of NBKP and 30 parts of polyethylene terephthalate fiber. The paper before pressure treatment had 152

g/m$^2$ in basis weight and 385 μm in thickness. The thickness after the pressure treatment was 136 μm.

Example 7

The same procedure as in Example 1 was repeated except that 60 parts of NBKP and 40 parts of vinyl chloride-vinyl alcohol copolymer fiber [trade name: Cordelan FBRH (2d× 5mm), free from crimp, Kohjin Co., Ltd.] were used in place of 70 parts of NBKP and 30 parts of polyethylene terephthalate fiber. The paper before pressure treatment had 150 g/m$^2$ in basis weight and 283 μm in thickness. The thickness after the pressure treatment was 129 μm.

Example 8

The same procedure as in Example 1 was repeated except that 50 parts of NBKP and 50 parts of polyethylene terephthalate fiber were used in place of 70 parts of NBKP and 30 parts of polyethylene terephthalate fiber. The paper before pressure treatment had 109 g/m$^2$ in basis weight and 314 μm in thickness. The thickness after the pressure treatment was 113 μm.

Example 9

The same procedure as in Example 1 was repeated except that 90 parts of NBKP and 10 parts of polyethylene terephthalate fiber were used in place of 70 parts of NBKP and 30 parts of polyethylene terephthalate fiber. The paper before pressure treatment had 109 g/m$^2$ in basis weight and 179 μm in thickness. The thickness after the pressure treatment was 81 μm.

Example 10

Paper was obtained in the same manner as in Example 1 except that a metal roll temperature was 100°C and a linear pressure was 1000 kg/cm. The resulting paper had 94 μm in thickness.

Example 11

Paper was obtained in the same manner as in Example 1 except that a metal roll temperature was 150°C and a linear pressure was 500 kg/cm. The resulting paper had 90 μm in thickness.

Example 12

Paper was obtained in the same manner as in Example 1 except that a linear pressure was 350 kg/cm. The paper had 93 μm in thickness.

Example 13

A stock was prepared by adjusting LBKP to 450 ml in terms of CSF, as a material pulp, adding 100 parts of a composite fiber composed of modified polyethylene terephthalate fiber and a polyethylene terephthalate fiber [trade name: Tepyrus TJ04CN (1.5d× 5mm), Teijin Ltd.] to 100 parts of LBKP, 0.8% of a cationic starch (trade name: Ace K-100, Oji Corn Starch Co., Ltd.), 0.1% of alkylketene dimer (trade name: SKS-293F, Arakawa Kagaku Kogyo Co., Ltd.), 0.08% of paper strength agent (trade name: PORYSTRON PS-460, Arakawa Kagaku Kogyo Co., Ltd.), and 0.5% of alum cake, with respect to the total weight of the pulp and synthetic fiber. The stock was made into paper by hand in a well-known manner by using a TAPII standard machine. After papermaking, a liquid containing 4% of polyvinyl alcohol (trade name: PVA-117, Kuraray Co., Ltd.) was applied to both surfaces of the paper by a size press so that it amounted to 2 g/m$^2$ calculated as solids. The obtained paper had 203 g/m$^2$ in basis weight. Then, on one side of the paper, a coating composition containing 66 parts of silicon-modified polyvinyl alcohol (R-1130, Kuraray Co., Ltd.) and 34 parts of aluminum hydroxide (trade name: Higilite H-42, Showa Denko Co., Ltd.) was applied by a bar so as to be 6 g/m$^2$ in dry weight, to obtain a sheet. The sheet was then passed through a nip provided by a metal roll and another metal roll under a temperature of 100 °C and a linear pressure of 1000 kg/cm.

Example 14

To the coating surface of the sheet obtained in Example 13, a biodegradable film (trade name: LACTY #1012, Shimadzu Seisakusho Ltd.) was laminated through 6 g/m$^2$ of adhesive [trade name: AC-216 (main agent): E-102 (hardener)= 100:1, Saiden Chemical Industry Co., Ltd.].

Example 15

To the coating surface of the sheet obtained in Example 13, a resin curable by electron beam (trade name: GRANDIC EB7-0311, Dainippon Ink and Chemicals Inc.) was applied so as to be 4 $g/m^2$ and then irradiated by an electron beam irradiator (CB-150, ESI Co., Ltd.) at 165 kV and 50 kGy.

Example 16

On the side opposite to the coating surface of the sheet obtained in Example 2, a resin curabel by electron beam (trade name: GRANDIC EB7-0313, Dainippon Ink and Chemicals Inc.) was applied so as to be 4 $g/m^2$ and then irradiated by an electron beam irradiator (CB-150, ESI Co., Ltd.) at 165 kV and 50 kGy.

Comparative Example 1

Paper made of 100 parts of NBKP was employed. This paper had 190 $g/m^2$ in basis weightand 262 μm in thickness.

Comparative Example 2

The paper of Comparative Example 1 was passed through a nip provided by a metal roll and another metal roll under the conditions of 100°C in the metal roll temperature, 1000 kg/cm in linear pressure and 20 m/min. in speed. The resulting paper had 140 μm in thickness.

Comparative Example 3

The paper prepared in Example 1 was employed.

Comparative Example 4

The same procedure as in Example 13 was conducted except that LBKP only was used as a pulp stock and the high-pressure treatment was conducted under the conditions of 150 °C in the metal roll temperature, 350 kg/cm in linear pressure and 20 m/min. in speed.

Tables 1 and 2 show the treatment conditions and physical properties of the papers in Examples and Comparative Examples.

Measurements and evaluation tests were conducted as stated below.

(1) Method of Measuring Expansion of Paper when immersed in Water

Measured by a method in accordance with J. TAPPI No. 27, B Method. More specifically, the sample was immersed in water for 5 minutes and thereafter checked for elongation by a Fenchel dimensional stability tester. The expansion of paper when immersed in water was calculated from the following equation.

$$\text{Expansion of paper (\%)} = [(L'-L)/L] \times 100$$

wherein L is the initial length (mm), and L' is the length after immersion (mm).

(2) Folding Endurance Measurement

Measurements were conducted according to JIS P 8115, by using MIT folding endurance tester.

(3) Degree of bending recovery

The sample, 25.4 mm in width and 63.5 mm in length, was tested by a Gurley stiffness tester. A 5-gram weight was attached to an equilibrium pendulum at a position 50.8 mm away from its pivot. The sample holder of the tester was positioned as set at 38.1 mm, and the sample was attached at its one end to the holder. The other end of the sample was held by hand, raised to the position of the holder and then released, causing the sample to strike against the pendulum when the sample restored itself from the bent state. The position to which the pendulum swung by the resulting reaction was read on the scale to obtain a numerical value. The sample was tested in the machine direction and the cross direction to obtain the average of the values obtained. The average value multiplied by 100 was taken as the degree of bending recovery. Each sample was tested five times.

Table 1

|  | basis weight (g/m²) | synthetic fiber (%) | condition | | density (g/cm³) | expansion of paper (%) |
|---|---|---|---|---|---|---|
|  |  |  | temp. (℃) | linear pressure (g/cm) |  |  |
| Ex.1 | 107 | 30 | 150 | 1000 | 1.19 | 0.47 |
| Ex.2 | 140 | 30 | 150 | 1000 | 1.19 | 0.51 |
| Ex.3 | 189 | 30 | 150 | 1000 | 0.89 | 0.52 |
| Ex.4 | 149 | 20 | 100 | 1000 | 1.10 | 0.60 |
| Ex.5 | 150 | 20 | 100 | 1000 | 0.96 | 0.57 |
| Ex.6 | 152 | 40 | 150 | 1000 | 1.12 | 0.09 |
| Ex.7 | 150 | 40 | 150 | 1000 | 1.16 | 0.60 |
| Ex.8 | 109 | 50 | 150 | 1000 | 0.96 | 0.14 |
| Ex.9 | 109 | 10 | 150 | 1000 | 1.35 | 0.47 |
| Ex.10 | 107 | 30 | 100 | 1000 | 1.14 | 0.57 |
| Ex.11 | 107 | 30 | 150 | 500 | 1.19 | 0.54 |
| Ex.12 | 107 | 30 | 150 | 350 | 1.15 | 0.50 |
| Com.Ex.1 | 190 | — | — | — | 0.72 | 1.93 |
| Com.Ex.2 | 190 | — | 100 | 1000 | 1.35 | 2.11 |
| Com.Ex.3 | 107 | 30 | — | — | 0.48 | 0.78 |

## Table 2

| | expansion of paper (%) | folding endurance (numbers) | Gurley stiffness (mg) | degree of bending recovery |
|---|---|---|---|---|
| Ex.13 | 0.16 | 10000< | 959 | 300 |
| Ex.14 | 0.15 | 10000< | 1096 | 410 |
| Ex.15 | 0.15 | 8257 | 1017 | 360 |
| Ex.16 | 0.15 | 10000< | 930 | 350 |
| Com.Ex.4 | 2.45 | 1806 | 1486 | 220 |

As apparent from Tables 1 and 2, the papers of the invention containing synthetic fiber have excellent dimensional stability. It is therefore possible to provide paper serving as a card substrate, with economy of manufacture, which are excellent in dimensional stability, rigidity and printability.

Example 17

A stock was prepared by adjusting a pulp mixture (NBKP/LBKP=2/8) serving as a material pulp to 500 ml in terms of CSF, adding 0.3% of a rosin size, 1.8% of alum cake to the pulp, and adding talc to the pulp in an amount of 9.7% calculated as an ash content of paper. The stock was made into paper by a Fourdrinier paper machine with cylinder dryers. In the papermaking step, a liquid containing 6.5% of starch (trade name: Ace A, Oji Corn Starch Co., Ltd.) was applied by a size press to both surfaces of the paper so that it amounted to 2 g/m$^2$ calculated as solids. The obtained paper had 5.5% in water content, 69.5 g/m$^2$ in basis weight, and 95 μm in thickness.

A film of ethylene-vinyl alcohol copolymer (trade name: EVAL EF-E#20, Kuraray Co., Ltd.) was laminated on the obtained paper and another paper made in the same manner was laminated on the film. The resulting paper was passed through a nip provided by a metal roll and another metal roll under a linear pressure of 2000 kg/cm at a roll temperature of 150°C and a speed of 10 m/min, thereby obtaining a laminate. The laminate had 121 μm in thickness and 84.8 ml/m$^2$ · 24h · atm in oxygen permeability (measured on Model GPM-250, gas chromatography connection type, GL SCIENCES INC., under the conditions of 30°C, 0% RH). This laminate had paper feeling and the permeability to oxygen that was unattainable with ordinary papers.

Example 18

A stock was prepared by adding 60 parts of LBKP adjusted to be 462 ml serving as a material pulp, and 40 parts of the core-sheath type fiber comprising a polypropylene core and a polyethylene coating portion [trade name: ESC864, 2 × 5 (2d × 5 mm), Chisso Co., Ltd.]. The stock was made into a paper by hand in a well-known manner by using a TAPPI standard machine. The obtained paper had 156 g/m$^2$ in basis weight and 403 μm in thickness. Then, this paper was interposed between the two papers prepared in Example 17, and the same high-pressure treatment as in Example 17 was conducted except that a roll temperature was 120°C and a linear pressure was 1000 kg/cm, to obtain a laminate. The laminate had 373 μm in thickness, 9285 in Gurley rigidity, and 0.55 in expansion of paper when immersed in water. This laminate had high rigidity, as well as excellent dimensional stability that was unattainable with ordinary papers.

Example 19

A stock was prepared by a Fourdrinier paper machine with cylinder dryers in the same manner as in Example 17 except that 100 parts of LBKP was used as a material pulp, and the basis weight was 50 g/m$^2$, to obtain a paper. Further, a stock was prepared by adding 60 parts of LBKP adjusted to be 462 ml, and 40 parts of a polyethylene synthetic pulp (trade name: SWP-E400, Mitsui Petrochemical Industries, Ltd.) serving as a material pulp. This stock was made into a paper by hand in a well-known manner by using a TAPPI standard machine. This paper had 153 g/m$^2$ in basis weight and 321 μm in thickness. Then, the hand-made paper containing synthetic pulp was interposed between the two papers prepared by the above Fourdrinier paper machine, and a high-pressure treatment was conducted at a roll temperature of 100°C under a linear pressure of 1000 kg/cm, to obtain a laminate.

Example 20

To one side of the laminate obtained in Example 19, silicon-modified polyvinyl alcohol (trade name: R-1130, Kuraray Co., Ltd.) was applied so as to be 2g/m$^2$ by using a bar coater, to obtain a laminate, one side of which is provided with an aqueous resin layer.

Example 21

To the side of the laminate obtained in Example 20 on which the silicon-modified polyvinyl alcohol had been applied, a resin curable by electron beam (trade name: GRANDIC EB7-0311, Dainippon Ink and Chemicals Inc.) was applied so as to be 2g/m$^2$, and then irradiated at 165 kV and 50 kGy by using an electron beam irradiator (Model CB-150, ESI Co., Ltd.), to obtain a laminate.

Example 22

The same procedure as in Example 20 was repeated except that a coating composition containing 66 parts of a silicon-modified polyvinyl alcohol (trade name: R-1130, Kuraray Co., Ltd.) and 34 parts of kaolin (trade name: Ultrawhite 90, Engelhard Corp.) was applied to one side of the laminate so as to be 3 g/m$^2$, to obtain a laminate.

Example 23

The same procedure as in Example 19 was repeated except that to the paper of 50 g/m$^2$ prepared in Example 3, a coating composition containing 66 parts of a silicon-modified polyvinyl alcohol (trade name: R-1130, Kuraray Co., Ltd.) and 34 parts of a kaolin (trade name: Ultrawhite 90, Engelhard Corp.) was applied so as to be 2 g/m$^2$, thereafter, the paper containing synthetic fiber prepared in Example 2 was placed on the side opposite to the coating surface, to obtain a laminate.

Example 24

The same procedure as in Example 18 was repeated except that a high-pressure treatment was conducted at a roll temperature of 150°C and a linear pressure of 350 kg/cm, to obtain a laminate. The laminate had 380 μm in thickness, 6702 in Gurley stiffness, and 0.60 in expansion of paper when immersed in water.

Example 25

The same procedure as in Example 17 was repeated except that the paper prepared in Example 17 had 140 g/m$^2$ in basis weight, as a biodegradable synthetic high-molecular-weight resin, polybutylenesuccinate-adipate (trade name: BIONOLLE #3001, Showa Kobunshi Co., Ltd.) was used in place of ethylene-vinyl alcohol copolymer, and a linear pressure was 1000 kg/cm, thereby obtaining a laminate.

Comparative Example 5

The same procedure as in Example 17 was repeated except that a linear pressure was 100 kg/cm, to obtain a laminate. Its base paper and sheet were not integrated.

The expansion of paper when immersed in water, folding endurance, air permeability and smoothness of the laminates of Examples 19 to 25 were measured. The results are shown in Table 3.

(1) Method of Measuring Expansion of Paper when immersed in Water: Same as above
(2) Folding Endurance Measurement: Same as above
(3) Method of Measuring Degree of bending recovery: Same as above

## Table 3

| | expansion of paper (%) | perme- ability (sec) | smoothness (sec) | folding endurance (numbers) | Gurley stiffness (mg) | degree of bending recovery |
|---|---|---|---|---|---|---|
| Ex.19 | 0.87 | 10000< | 715 | 1460 | 1046 | 350 |
| Ex.20 | 0.85 | 10000< | 853 | 1183 | 1766 | 360 |
| Ex.21 | 0.84 | 10000< | 1202 | 563 | 1532 | 340 |
| Ex.22 | 0.85 | 10000< | 496 | 1015 | 1443 | 355 |
| Ex.23 | 0.72 | 10000< | 773 | 2530 | 1354 | 370 |
| Ex.24 | 0.60 | 10000< | 560 | 3025 | 1760 | 550 |
| Ex.25 | 0.66 | 10000< | 350 | 4523 | 3384 | 400 |
| Com.Ex.5 | base paper and sheet were not integrated | | | | | |

Because of the high-pressure treatment at the nip provided by a metal roll and another metal roll, the laminates of all examples are excellent in smoothness and thus permit a satisfactory printing.

As apparent from Table 3, by stacking a base paper and a substrate different from the base paper and conducting the high-pressure treatment with a nip provided by a metal roll and another metal roll, it is able to obtain a laminate excellent in rigidity which takes advantage of the performance of an integrated substrate, without substantially employing any adhesive. This leads to paper that satisfies all of dimensional stability, rigidity and printability, complies with a small lot, and serves as a card substrate with economy of manufacture.

Example 26

A pulp slurry for outermost layers was obtained by adjusting LBKP to 450 ml in terms of CSF, as a material pulp, and adding 0.2% of a rosin size (trade name: SPN-773, Arakawa Kagaku Co., Ltd.) and 2.5% of alum cake. A pulp slurry for an inner layer was obtained by adding 40% of LBKP adjusted to 450 ml in terms of CSF, and 60% of composite fiber [trade name: Tepyrus TJ04CN (1.5d × 5mm), melting point: 110°C, Teijin Ltd.] composed of modified polyethylene terephthalate fiber and polyethylene terephthalate fiber, and then adding 0.2% of a rosin size (trade name: SPN-773, Arakawa Kagaku Co., Ltd.) and 2.5% of alum cake, to the LBKP.

From these pulp slurries, a three-layer combination paper was formed so that the outermost layers were in 30 g/m$^2$ and the inner layer was in 150 g/m$^2$. In the step of papermaking, polyvinyl alcohol (trade name: PVA-117, Kuraray Co., Ltd.) was applied to both surfaces by a size press so that it amounted to 2 g/m$^2$ calculated as solids.

The three-layer combination paper was passed through a nip provided by a metal roll and another metal roll under conditions of 100°C in temperature, 1000 kg/cm in linear pressure, and 20 m/min. in speed, to obtain a multilayer paper. Its density was 1.12 g/cm$^3$.

Example 27

To one side of the three-layer combination paper obtained in Example 26, silicon-modified polyvinyl alcohol (trade name: R-1130, Kuraray Co., Ltd.) was applied so as to be 2 g/m$^2$ by a bar coater. Then, high-pressure treatment was carried out in the same conditions as in Example 26, to obtain a multilayer paper.

Example 28

The same procedure as in Example 27 was repeated except that a coating composition containing 66 parts of silicon-modified polyvinyl alcohol (trade name: R-1130, Kuraray Co., Ltd.) and 34 parts of kaolin (trade name: Ultrawhite 90, Engelhard Corp.) was applied to one side in 3 $g/m^2$, to obtain a multilayer paper.

Example 29

To one side of the multilayer paper obtained in Example 26, silicon-modified polyvinyl alcohol (trade name: R-1130, Kuraray Co., Ltd.) was applied so as to be 2 $g/m^2$ by a bar coater.

Example 30

To the side on which the silicon-modified polyvinyl alcohol had been applied in the multilayer paper obtained in Example 27, resin curable by electron beam (trade name: GRANDIC EB7-0311, Dainippon Ink and Chemicals Inc.) was applied so as to be 4 $g/m^2$, and then irradiated at 165 kV and 50 kGy by using an electron beam irradiator (Model CB-150, ESI Co., Ltd.), to obtain a multilayer paper.

Example 31

A pulp slurry for outermost layers was obtained by preparing a pulp mixture (LBKP/NBKP=50/50) adjusted to 460 ml in terms of CSF, as a material pulp, and adding 10% of composite fiber [trade name: Tepyrus TJ04CN (1.5d × 5mm), melting point: 110°C, Teijin Ltd.] composed of modified polyethylene terephthalate fiber and polyethylene terephthalate fiber, and 0.2% of a rosin size (trade name: SPN-773, Arakawa Kagaku Co., Ltd.) and 2.5% of alum cake, to the pulp. A pulp slurry for an inner layer was obtained in the same manner as in Example 26 except that the proportion of composite fiber was 40%.

From these pulp slurries, a five-layer combination paper comprising two outermost layers of 30 $g/m^2$ and three inner layers of 50 $g/m^2$. Then, size press was carried out in the same manner as in Example 26. To one side of the obtained multilayer paper, silicon-modified polyvinyl alcohol (trade name: R-1130, Kuraray Co., Ltd.) was applied so as to be 1 $g/m^2$ by a bar coater. To the other side, coating composition containing 100 parts of heavy calcium carbonate (trade name: Hydrocarb K-6, BIHOKU FUNKA KOGYO CO., LTD.), 6 parts of starch (trade name: Ace P260, Oji Corn Starch Co., Ltd.), 6 parts of latex (trade name: L-1106, Asahi Chemical Industry Co., Ltd.), 0.4 part of thickener (trade name: Serogen WSC, Daiichi Kogyo Seiyaku Co., Ltd. ), and 0.0075 part of auxiliary (trade name: SANMORIN OT-70, Sanyo Chemical Industries Ltd.) was applied so as to be 10 $g/m^2$ by a bar coater. Thereafter, this five-layer combination paper was passed through a nip provided by a metal roll and another metal roll under the conditions of 150°C in temperature, 1750 kg/cm in linear pressure, and 100 m/min. in speed.

Example 32

By using LBKP similar to that in Example 26 as a material pulp, the same procedure as in Example 26 was repeated except that an inner layer was prepared by using 40% of LBKP and 60% of polyolefin synthetic pulp [trade name: SWP E400 (standard × 0.9mm), Mitsui Petrochemical Industries, Ltd.], and the basis weight was 190 $g/m^2$, to obtain a three-layer combination paper. The paper was then subjected to the same high-pressure treatment as in Example 26. The resulting paper had 1.11 $g/cm^3$ in density.

Example 33

By using LBKP similar to that in Example 26 as a material pulp, the same procedure as in Example 26 was repeated except that an inner layer was prepared by using 60% of LBKP and 40% of polyolefin synthetic pulp [trade name: SWP E400 (standard × 0.9mm), Mitsui Petrochemical Industries, Ltd.], and the basis weight was 150 $g/m^2$, to obtain a three-layer combination paper.

The three-layer combination paper was passed through a nip provided by a metal roll and another metal roll under conditions of 100°C in temperature, 2500 kg/cm in linear pressure, and 50 m/min. in speed, to obtain a multilayer paper. Its density was 1.31 $g/cm^3$.

Example 34

By using LBKP similar to that in Example 26 as a material pulp, the same procedure as in Example 26 was repeated except that an inner layer was prepared by using 80% of LBKP and 20% of polyolefin synthetic pulp [trade name: SWP E400 (standard × 0.9mm), Mitsui Petrochemical Industries, Ltd.], and the basis weight was 150 g/m$^2$, to obtain a three-layer combination paper.

The three-layer combination paper was passed through a nip provided by a metal roll and another metal roll under conditions of 200°C in temperature, 500 kg/cm in linear pressure, and 50 m/min. in speed, to obtain a multilayer paper. Its density was 1.04 g/cm$^3$.

Comparative Example 6

The same procedure as in Example 26 was repeated except that an inner layer was prepared by using 100 parts of LBKP and the basis weight was 150 g/m$^2$, to obtain a multilayer paper. Its density was 1.31 g/cm$^3$.

Comparative Example 7

The three-layer combination paper made in Example 26 was employed as a multilayer paper. Its density was 0.53 g/cm$^3$.

Comparative Example 8

A pulp slurry for outermost layers was obtained by preparing a pulp mixture (LBKP/NBKP=50/50) adjusted to 450 ml in terms of CSF, as a material pulp, and adding 0.2% of a rosin size (trade name: SPN-773, Arakawa Kagaku Co., Ltd.) and 2.5% of alum cake. A pulp slurry for an inner layer was obtained by adding 58% of a pulp mixture (LBKP/NBKP=50/50) adjusted to 450 ml in terms of CSF, and 42% of vinylon fiber [trade name: KURALON VPB 101 Kuraray Co., Ltd. (1.5d × 4mm), melting point: 80°C], and then adding 0.2% of a rosin size (trade name: SPN-773, Arakawa Kagaku Co., Ltd.) and 2.5% of alum cake, to the pulp.

From these pulp slurries, a three-layer combination paper was formed so that the outermost layers were in 30 g/m$^2$ and the inner layer was in 147 g/m$^2$. In the step of papermaking, polyvinyl alcohol (trade name: PVA-117, Kuraray Co., Ltd.) was applied to both surfaces by a size press so that it amounted to 2 g/m$^2$ calculated as solids. The density of this multilayer paper obtained without high-pressure treatment was 0.75 g/cm$^3$.

The expansion of paper when immersed in water, folding endurance, air permeability, degree of bending recovery, and internal bonding strength of the multilayer papers thus obtained were measured. The results are shown in Table 4.

(1) Method of Measuring Expansion of Paper when immersed in Water: Same as above
(2) Method of Measuring Degree of bending recovery: Same as above
(3) Internal Bonding Strength
   Measurements were conducted according to JAPAN TAPPI No. 54.

Table 4

| | expansion of paper (%) | perme- ability (sec) | smoothness (sec) | Gurley stiffness (mg) | degree of bending recovery | internal bonding strength ($\times 10^3$ J) |
|---|---|---|---|---|---|---|
| Ex.26 | 0.18 | 3306 | 87 | 1233 | 340 | 332.2 |
| Ex.27 | 0.18 | 28872 | 1804 | 1422 | 370 | 320.5 |
| Ex.28 | 0.18 | 35913 | 1148 | 1435 | 380 | 325.3 |
| Ex.29 | 0.18 | 100000< | 1020 | 1356 | 350 | 316.8 |
| Ex.30 | 0.18 | 100000< | 1120 | 1520 | 420 | 330.6 |
| Ex.31 | 0.73 | 18849 | 542 | 1388 | 300 | 398.3 |
| Ex.32 | 0.20 | 100000< | 828 | 1726 | 280 | 335.6 |
| Ex.33 | 0.64 | 100000< | 130 | 623 | 260 | 402.5 |
| Ex.34 | 0.90 | 100000< | 120 | 701 | 290 | 385.4 |
| Com.Ex.6 | 2.52 | 33 | 1 | 2138 | 130 | 74.2 |
| Com.Ex.7 | 0.29 | 20 | 2 | 3771 | 180 | 63.7 |
| Com.Ex.8 | 1.68 | 262 | 2 | 1407 | 270 | 120.5 |

As apparent from the results of Table 4, every example is excellent in dimensional stability. Examples 26, 31, 32 and Comparative Example 7 show that both smoothness and internal bonding strength are increased to provide excellent multilayer paper by passing through the nip provided by a metal roll and another metal roll in a linear pressure ranging from 200 to 3500 kg/cm.

Since the multilayer papers of the present invention are excellent in dimensional stability, rigidity and air permeability, they can satisfy coating amenability of coating of magnetic recording layer and the like, as well as printability, thus leading to multilayer papers with economy of manufacture.

## Claims

1. A structure of at least one layer and the structure comprises at least one layer containing synthetic fiber, which is obtained by high-pressure treatment through a nip provided by a metal roll and another metal roll under a linear pressure in the range of 200 to 3500 kg/cm.

2. A structure as defined in claim 1 wherein the structure is one layer and the layer containing synthetic fiber is paper containing synthetic fiber.

3. A structure as defined in claim 2 wherein the synthetic fiber is contained in 3 to 70 % by weight of total fibers.

4. A structure as defined in claim 2 or 3 wherein the synthetic fiber is at least one selected from polyolefin fiber, aliphatic or aromatic polyester fiber, halogen-containing polymer fiber, and composite fiber comprising at least one of these.

**5.** A structure as defined in any one of claims 2-4 wherein the synthetic fiber is a biodegradable fiber.

**6.** A structure as defined in any one of claims 2-5 wherein a high-molecular weight film is laminated on at least one side through an adhesive layer.

**7.** A structure as defined in claim 6 wherein the high-molecular-weight film is a biodegradable film.

**8.** A structure as defined in claim 1 wherein the structure is at least two layers and the layer containing synthetic fiber is made from at least one of a synthetic high-molecular-weight compound and a semi-synthetic high-molecular-weight compound, and the layer is in the form of a film or fiber sheet, and other layer is paper.

**9.** A structure as defined in claim 8 wherein the layer containing synthetic fiber is made from at least one of a synthetic high-molecular-weight compound and a semi-synthetic high-molecular-weight compound, each containing a natural pulp, and the layer is in the form of a fiber sheet.

**10.** A structure as defined in claim 8 wherein the synthetic high-molecular-weight compound and semi-synthetic high-molecular-weight compound is biodegradable.

**11.** A structure as defined in claim 8 wherein the film of a synthetic high-molecular-weight compound is ethylene-vinyl alcohol copolymer film.

**12.** A structure as defined in claim 1 wherein the structure is at least three layers and the structure is a multilayer combination paper comprising at least one layer containing synthetic fiber, and the density of the multilayer combination paper ranges from 0.9 to 1.6 g/cm$^3$.

**13.** A structure as defined in claim 12 wherein the layer containing synthetic fiber also contains natural pulp.

**14.** A structure as defined in claim 12 or 13 wherein the amount of synthetic fiber contained in each of two outermost layers does not exceed that of at least one intermediate layer surrounded by the two outermost paper layers.

**15.** A structure as defined in claim 12 or 13 wherein at least one of two outermost paper layers contains no synthetic fiber.

**16.** A structure as defined in claim 12 or 13 wherein the synthetic fiber is polyester composite fiber.

**17.** A structure as defined in claim 12 or 13 wherein the density is 1.0 to 1.5 g/cm$^3$, preferably 1.1 to 1.4 g/cm$^3$.

**18.** A structure of at least two layers and one layer is paper and other layer is a paper different from the above paper in the form or the like, and these are stacked and integrated by passing them through a nip provided by a metal roll and another metal roll in a linear pressure of from 200 to 3500 kg/cm, without substantially applying any adhesive.

**19.** A structure as defined in any one of claims 1 to 18 wherein the linear pressure in the nip is 500 to 3500 kg/cm.

**20.** A structure as defined in any one of claims 1 to 19 wherein an aqueous resin layer is provided on at least one side.

**21.** A structure as defined in claim 20 wherein a pigment is added to the aqueous resin layer.

**22.** A structure as defined in claim 20 or 21 wherein a resin layer curable by ionizing radiation is provided on the aqueous resin layer.

**23.** A structure as defined in any one of claims 1 to 22 wherein the structure is used as a card substrate.

European Patent Office

**EUROPEAN SEARCH REPORT**

Application Number

EP 98 11 1882

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,Y | EP 0 812 956 A (OJI PAPER CO) 17 December 1997<br>* examples 32,33 *<br>* page 8, line 29 - page 9 * | 18-21 | D21H13/00<br>D21H27/00<br>B32B29/00 |
| P,X | * the whole document * | 1,2,4,6, 8 | |
| X | DATABASE WPI<br>Section Ch, Week 8615<br>Derwent Publications Ltd., London, GB;<br>Class A23, AN 86-097114<br>XP002076696<br>& JP 61 041 592 A (TEIJIN LTD)<br>* abstract * | 1-4 | |
| X | DATABASE WPI<br>Section Ch, Week 9222<br>Derwent Publications Ltd., London, GB;<br>Class A18, AN 92-178699<br>XP002076697<br>& JP 04 114 029 A (NIPPON SHOKUBAI CO LTD)<br>* abstract * | 1,2,4 | |
| X | DATABASE WPI<br>Section Ch, Week 9418<br>Derwent Publications Ltd., London, GB;<br>Class A23, AN 94-148344<br>XP002076698<br>& JP 06 093 516 A (KURARAY CO LTD)<br>* abstract * | 1,2,4,5 | TECHNICAL FIELDS SEARCHED (Int.Cl.6)<br><br>D21H<br>B32B |

-/--

The present search report has been drawn up for all claims

| Place of search | Date of completion of the search | Examiner |
|---|---|---|
| MUNICH | 7 September 1998 | Naeslund, P |

EPO FORM 1503 03.82 (P04C01)

European Patent Office

**EUROPEAN SEARCH REPORT**

Application Number

EP 98 11 1882

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DATABASE WPI<br>Section Ch, Week 9606<br>Derwent Publications Ltd., London, GB;<br>Class A92, AN 96-055369<br>XP002076699<br>& JP 07 315 433 A (SUNSTAR CHEM IND CO LTD)<br>* abstract * | 1,2,6,7, 20,23 | |
| X | DATABASE WPI<br>Section Ch, Week 9016<br>Derwent Publications Ltd., London, GB;<br>Class A18, AN 90-118432<br>XP002076700<br>& JP 02 063 889 A (KANZAKI PAPER MFG CO LTD)<br>* abstract * | 1,2,6 | |
| A | US 5 552 011 A (LIN ALLEN F) 3 September 1996<br>* figure 1 * | 12 | |
| A | DATABASE WPI<br>Section Ch, Week 8911<br>Derwent Publications Ltd., London, GB;<br>Class A94, AN 89-081851<br>XP002076701<br>& JP 01 034 734 A (OJI YUKA GOSEISHI KK) | 12,13 | TECHNICAL FIELDS SEARCHED (Int.Cl.6) |
| Y | * abstract * | 18-21 | |

The present search report has been drawn up for all claims

| Place of search | Date of completion of the search | Examiner |
|---|---|---|
| MUNICH | 7 September 1998 | Naeslund, P |

EPO FORM 1503 03.82 (P04C01)